# EUROPÄISCHE PATENTSCHRIFT

(11) **EP 2 571 663 B1**
(45) Veröffentlichungstag und Bekanntmachung des Hinweises auf die Patenterteilung: **19.03.2014**
(21) Anmeldenummer: 12727245.8
(22) Anmeldetag: 30.03.2012
(51) Int. Cl.: B28B 15/00, B28B 7/22, B28B 7/02, B28B 7/08

(54) **VERFAHREN UND FERTIGUNGSANLAGE ZUR HERSTELLUNG VON FERTIGBAUTEILEN AUS MINERALISCH GEBUNDENEN BAUSTOFFEN**
METHOD AND MANUFACTURING SYSTEM FOR PRODUCING PREFABRICATED PARTS FROM MINERAL-BOUND BUILDING MATERIALS
PROCÉDÉ ET SYSTEME DE PRODUCTION POUR LA FABRICATION D'ÉLÉMENTS PRÉFABRIQUÉS EN MATÉRIAUX À LIANTS MINÉRAUX

(30) Priorität: 30.03.2011 DE 102011015600
(43) Veröffentlichungstag der Anmeldung: 27.03.2013
(73) Patentinhaber: Maier, Christoph, 86807 Buchloe (DE)
(72) Erfinder: Maier, Christoph, 86807 Buchloe (DE)
(74) Vertreter: Käck, Stefan
(86) Internationale Anmeldenummer: PCT/DE2012/000337
(87) Internationale Veröffentlichungsnummer: WO 2012/130222

(56) Entgegenhaltungen:
- WO-A2-01/29337
- DE-A1- 2 034 205
- DE-A1- 2 154 956
- DE-A1-102006 051 045
- US-A- 4 207 042
- US-A1- 2003 234 339

## Beschreibung

Die Erfindung betrifft ein Verfahren zum Herstellen von Fertigbauteilen aus mineralisch gebundenen Baustoffen mittels einer Fertigungsanlage gemäß den Merkmalen des Patentanspruchs 15 sowie eine Fertigungsanlage zur Herstellung von Fertigbauteilen aus mineralisch gebundenen Baustoffen gemäß den Merkmalen des Patentanspruchs 1.

Insbesondere die Errichtung von Gebäuden erfordert einen hohen Aufwand an Personal, Zeit und Transportlogistik. Durch die Fertighausbauweise kann dieser Aufwand reduziert werden.

Es gibt verschiedene Methoden, Fertighäuser herzustellen:
Eine Möglichkeit besteht darin, ein sogenanntes schlüsselfertiges Haus von einem Unternehmen erbauen zu lassen. In der Regel steht der Rohbau eines schlüsselfertigen Hauses nach ca. 6 Wochen.

Eine weitere Möglichkeit besteht darin, Fertigbauteile von einem Händler zu beziehen und den Aufbau der Wände, Böden und Decken selbst zu übernehmen. In strukturschwachen Gebieten sind in der Regel sehr lange Transportwege zurückzulegen, da das Werk, in dem die Fertigbauteile hergestellt werden, sich zumeist in Gebieten mit für die fabrikmäßig Fertigung optimaler Infrastruktur befindet, sich in der Regel also weit entfernt befindet. Trotz der Vorteile der Fertigbauweise kommt diese Technologie wegen der vorstehend beschriebenen Nachteile nur selten zum Einsatz.

Bei beiden Möglichkeiten gibt man die Fertigung der Fertigbauteile aus fertigungstechnischen und logistischen Gründen aus der Hand.

Die Produktion von Fertigbauteilen findet in der Regel in Fabriken statt, von welchen dann die Fertigbauteile bzw. die kompletten Fertighäuser zu einem gewünschten Errichtungsort transportiert werden. Gerade bei größeren Bauvorhaben oder Projekten mit Zeitdruck, z.B. nach Naturkatastrophen, sind lange Bauzeiten oder lange Transportwege inakzeptabel. Hier soll Abhilfe geschaffen werden.

Der Erfindung liegt daher die Aufgabe zugrunde, ein Verfahren zur Herstellung von Fertigbauteilen aus mineralisch gebundenen Baustoffen aufzuzeigen, welches es ermöglicht, unterschiedliche Fertigbauteile, insbesondere Wände, Böden und Decken bzw. komplette Bauwerke in der Nähe des Verwendungsortes der Fertigbauteile herzustellen. Ferner soll eine Fertigungsanlage aufgezeigt werden, welche die Herstellung von Fertigbauteilen aus mineralisch gebundenen Baustoffen in der Nähe des Verwendungsortes der Fertigbauteile ermöglicht.

Aus dem Stand der Technik sind bereits unterschiedliche Vorrichtungen und Verfahren zur Herstellung von Fertigbauteilen bekannt.

Beispielsweise offenbart US 2003/0234339 A1 eine Vorrichtung zum Herstellen von Bauteilen wie beispielsweise Wänden, Böden, Decken und Dächern. Die Vorrichtung weist hierfür ein oder mehrere Tische auf, die auf einem Anhänger montiert sind. Für Lager- und Transportzwecke befinden sich die Tische in einer aufrechten Position. Für die Herstellung der Bauelemente werden die Tische in eine horizontale Position gebracht.

DE 2 154 956 A beschreibt ferner eine transportable Fertigungsmaschine für Stahlbeton-Fertigteile aller Art. Die Fertigungsmaschine besteht aus einem Transportgestell, dem darauf gesetzten Fertigungsgestell und den Zusatzformstücken. Das Transportgestell ermöglicht den Transport der Fertigungsanlage in Form eines Anhängers und weist hierfür beispielsweise Räder mit den zugehörigen Achsen, Lagerungen und ein Drehgestell als Kurvenfahrwerk auf.

In US 4,207,042 wird eine Maschine zum horizontalen Gießen von Betonwandplatten und zur Montage dieser zu Räumen oder eingeschossigen Gebäuden beschrieben. Die Maschine weist Schienen sowie einen auf den Schienen verfahrbaren Rahmen auf. Zwei Form-Aufrichter zum Gießen und Aufstellen von sich längs erstreckenden Wandplatten sind an den Rahmen gelagert und um mehr als 90° parallel zu den Schienen rotierbar.

DE 10 2006 051 045 A1 betrifft ferner eine Vorrichtung zum Herstellen von Betonfertigteilen. Die vollständige Ausrüstung zur Herstellung der Betonfertigteile ist in einem Frachtgutcontainer untergebracht, der direkt an einer Baustelle absetzbar ist. Der Frachtgutcontainer bildet gleichzeitig einen klimatisierbaren Aushärteraum. Zur geordneten Auf- und Entnahme der Gerätschaften wird insbesondere ein im Frachtgutcontainer angeordnetes Schienensystem vorgeschlagen.

Auch DE 2 034 205 A1 beschreibt eine Vorrichtung zur Herstellung von Betonelementen. Die Vorrichtung weist einen Laderaum auf, in dem Formen für Betonelemente horizontal übereinander angeordnet sind. Zum Beschleunigen des Abbindevorgangs kann der Laderaum durch Einblasen von heißer Luft auf eine gewünschte Temperatur erhitzt werden. Ferner können mittels Schienen und Räder die Formen aus dem Laderaum herausgefahren werden.

WO 01/29337 A2 lehrt schließlich ein Verfahren und eine Vorrichtung zur Herstellung von Teilstücken einer Struktur. Die Vorrichtung weist eine Form mit einer Arbeitsoberfläche auf, auf welcher die Teilstücke hergestellt werden. Die Form hat einen Bewegungsmechanismus, welcher es erlaubt die Teilstücke in nahezu jede Position zu bewegen.

Eine erfindungsgemäße Fertigungsanlage ist Gegenstand des Patentanspruchs 1.

Der verfahrensmäßige Teil der Aufgabe wird durch ein Verfahren mit den Merkmalen des Patentanspruchs 15 gelöst.

Die abhängigen Unteransprüche betreffen vorteilhafte Weiterbildungen.

Bei dem erfindungsgemäßen Verfahren zur Herstellung von Fertigbauteilen aus mineralisch gebundenen Baustoffen, insbesondere zur Errichtung von Gebäuden mittels einer Fertigungsanlage, umfasst die verwendete Fertigungsanlage als wesentliche Komponente mindestens einen Schaltisch, der zum Gießen der Fertigbauteile aus mineralisch gebundenen Baustoffen vorgesehen ist. Die Fertigungsanlage ist mobil und zur Fertigung der Fertigbauteile kann diese zum Verwendungsort der Fertigbauteile und insbesondere zum Errichtungsort eines Bauwerkes gebracht werden. Diese Mobilität ermöglicht es also, eine komplette kleine Fabrik zur Fertigung von Fertigbauteilen aus mineralisch gebundenen Baustoffen an verschiedenste Orte zu transportieren.

Die erforderlichen Bindemittel, Gesteinskörnungen sowie Anmachwasser und etwaige Zusätze zur Herstellung mineralisch gebundener Baustoffe können leichter transportiert werden als bereits daraus hergestellte sperrige Fertigbauteile, die aufgrund ihrer Größe oftmals ein erhebliches Gewicht haben. Die Transportlogistik ist viel einfacher, da vor Ort lediglich Baustoffe oder deren Rohstoffe sowie Materialien zur Verfügung gestellt werden müssen, die in der Regel auf kürzeren Transportwegen zu beschaffen sind.

Mit dem erfindungsgemäßen Verfahren lassen sich insbesondere folgende Fertigbauteile herstellen:
Wand-, Decken-, Boden-, Fundament- oder Steinelemente, Fassadenelemente, Putzplatten, Dämmelemente oder Zaunelemente.

Es können insbesondere vor Ort Fertigbauteile mit sehr unterschiedlichen Dichten hergestellt werden, z.B. aus Beton und aus einem viel leichteren Dämmstoff.

Erfindungsgemäß passt die gesamte Fertigungsanlage in einen Frachtgutcontainer, welcher mittels eines Lastkraftwagens zum Errichtungsort transportiert wird. Der Frachtgutcontainer lässt sich problemlos auf dem Luft-, Wasser- oder Landweg transportieren. Die Fertigungsanlage kann also an jeden Ort, zu dem eine Straße führt, transportiert werden.

Weiterhin ist es vorgesehen, dass der Schaltische zum Gießen der Fertigbauteile in eine horizontale Position gebracht wird und zum bzw. nach dem Schalen um eine horizontale Achse geneigt wird. In der horizontalen Position wird eine Mischung eines mineralischen Baustoffs in die Schalung gegeben. In dieser Position kann der mineralische Baustoff plan abgezogen werden. Nachdem der mineralische Baustoff dann in der Schalung soweit abgebunden ist, kann ausgeschalt werden. Zum Ausschalen von Wandelementen wird der Schaltisch um die horizontale Achse geneigt, so dass die getrockneten Fertigbauteile entnommen werden können.

In vorteilhafter Weise sind mehrere Schaltische vorgesehen, welche unabhängig voneinander verlagert werden können. Dies bringt den Vorteil mit sich, dass zeitgleich mehrere Fertigbauteile unabhängig voneinander hergestellt werden können. Während auf einem Schaltisch noch eine nasse Mischung eines mineralischen Baustoffs aushärtet, kann an einem anderen Schaltisch das bereits ausgehärtete Fertigbauteil entnommen werden. Zeitgleich kann in eine dritte Schalung eines weiteren Schaltisches eine neue Mischung eines mineralischen Baustoffs gegossen werden. Außerdem ist es vorteilig, dass zeitgleich unterschiedlich konfigurierte Fertigbauteile gefertigt werden können. Böden, Decken und Wände können mit variablen Aussparungen für Türen und Fenster versehen werden. Dies ermöglicht die Nutzung von bewährten Standardformen oder aber die Verwirklichung von individuellen Vorstellungen. Das heißt, dass auf einem Schaltisch beispielsweise eine Wand und auf einem zweiten Schaltisch ein anderes Bauteil gegossen werden kann.

Bevorzugt wird der Schaltisch über eine Druckkraft in seine jeweils erforderliche Position geneigt. Die Druckkraft wird dabei in vorteilhafter Weise mittels eines Linearantriebs in den Schaltisch eingeleitet. Die Druckkraft wird von einer der Schalfläche gegenüberliegenden Unterseite des Schaltisches her eingeleitet. Hierfür ist der Linearantrieb unterhalb des Schaltisches angebracht, wobei er sich zwischen dem Schaltisch und dem jeweiligen Untergrund oder einer entsprechenden Unterkonstruktion, beispielsweise einem Tragwerk, erstreckt.

Um eine sich möglichst stabil verhaltende sowie ausbalancierte und insbesondere mit wenig Verwindungen einhergehende Verlagerung sowie Neigung des Schaltisches zu erreichen, ist vorgesehen, dass die Druckkraft im Bereich des Flächenschwerpunktes des Schaltisches eingeleitet wird.

Gegenüber einer zum Neigen des Schaltisches eingeleiteten Zugkraft kann die über den Linearantrieb erzeugte Druckkraft eine erhöhte Sicherheit bieten. So werden Zugkräfte durch entsprechende Zugmittel wie beispielsweise Seile oder Ketten übertragen, deren Versagen zu einem meist schlagartigen Abkippen des Schaltisches führt. Die daraus entstehende Gefährdung des Bedienpersonals sowie die mögliche Beschädigung der Anlage wird erfindungsgemäß dadurch vermieden, dass der verwendete Linearantrieb eine Sicherung gegenüber Rückstellung aufweist. Diese Rückstellsicherung kann bereits bauartbedingt vorhanden sein, sofern beispielsweise ein selbsthemmender Spindel- oder Zahnstangenantrieb Verwendung findet.

Bevorzugt wird der Linearantrieb hydraulisch angetrieben. Es handelt sich bevorzugt um einen einfachwirkenden oder doppeltwirkenden Hubzylinder. Als Fluid für den hydraulischen Antrieb kann Öl, Wasser oder eine Öl-Wasser-Emulsion eingesetzt werden.

In vorteilhafter Weise besitzt der hydraulische Antrieb ein Sicherheitselement oder ist mit einem solchen gekoppelt. Das Sicherheitselement ist dafür vorgesehen, ein unerwünschtes Absinken des aus seiner horizontalen Position heraus geneigten und somit aufgestellten Schaltisches wirksam zu verhindern. Das Sicherheitselement kann beispielsweise ein Rückschlagventil sein. Zusätzlich können Druckbegrenzungsventile vorgesehen sein, die vor Überdruck schützen.

Die zur Betätigung des Linearantriebs erforderliche Stellkraft kann sowohl aus Muskelkraft als auch aus einem geeigneten Antrieb heraus erfolgen. Zur Vergrößerung der Stellkraft sind geeignete Kraftübersetzer, d. h. Getriebe oder auch Druckübersetzer vorgesehen, die mit einer Pumpe gekoppelt sind. Selbstverständlich kann auch die Pumpe mittels Muskelkraft betrieben werden. Weiterhin kann die Pumpe auch motorisch betrieben sein, beispielsweise über einen Elektromotor oder einen Verbrennungsmotor. Denkbar ist auch die Verbindung des Linearantriebs mit einer externen Hydraulik- oder Pneumatikquelle, beispielsweise eines Kraftfahrzeugs (Traktor, Unimog, LKW).

Bevorzugt besitzt jeder einzelne Schaltisch zwei parallel zueinander beabstandete horizontale Achsen. Die einzelnen Schaltische können jeweils um eine dieser Achsen in jeweils gleiche oder voneinander unterschiedliche Richtungen geneigt werden. Der Vorteil ist, dass auf einer Fertigungsanlage mit mehreren Schaltischen parallel mehrere Fertigteile erstellt werden können, welche bei Bedarf zu der jeweils erforderlichen Seite hin geneigt und somit aufgestellt werden können.

So kann es beispielsweise von Vorteil sein, dass die zur jeweiligen Schalfläche der Schaltische gewandte Seite des Fertigbauteils die äußere Sichtseite von Wandelementen bildet. Um die Fertigteile nicht noch aufwendig vor ihrem Aufstellen am Bestimmungsort drehen zu müssen, können diese bereits durch die Wahl der Neigerichtung des Schaltisches passend aufgerichtet werden.

Die Schaltische sind insbesondere verfahrbar. Bevorzugt sind sie auf einem Tragwerk gelagert, das auf Schienen aus dem Frachtgutcontainer heraus, und bei Nichtgebrauch in diesen hinein verlagert wird. Die Verlagerung kann auf einem schienengebundenen oder schienenungebundenen System erfolgen. Die Schaltische können bei Nichtgebrauch, nach beendeter Arbeit, zum Schutz vor ungünstiger Witterung oder auch zum Schutz vor Diebstahl in den Frachtgutcontainer verlagert und insbesondere verfahren werden.

Es ist möglich, dass das Ende des Linearantriebs analog der jeweiligen Neigerichtung des Schaltisches versetzt werden kann. Bevorzugt ist das dem Schaltisch abgewandte Ende des Linearantriebs lösbar mit dem Tragwerk gekoppelt. Die Kopplung kann beispielsweise über eine lösbare Verbolzung erfolgen. Hierfür weist das Tragwerk wenigstens zwei sich gegenüberliegende Aufnahmen auf, wobei besagtes Ende des Linearantriebs wahlweise mit der einen oder der anderen Aufnahme gekoppelt wird.

In vorteilhafter Weise wird der Linearantrieb mit jener, der horizontalen Achse gegenüberliegenden Aufnahme des Tragwerks gekoppelt, um welche herum der Schaltisch geneigt werden soll.

Der Schaltisch kann ein Fahrwerk aufweisen. Durch das Fahrwerk kann der Schaltisch autark verfahren werden. Selbstverständlich kann das Fahrwerk auch an dem Tragwerk angeordnet sein, auf welchem mehrere Schaltische gelagert sind. Durch das Tragwerk kann der Schaltisch zwischen seinen etwaigen Einsatzorten verfahren werden. In gleicher Weise können so auch mehrere, auf dem Tragwerk angeordnete Schaltische gemeinsam zwischen ihren Einsatzorten verfahren werden, sofern das Fahrwerk an dem Tragwerk angeordnet ist.

Je nach Ausbildung des Fahrwerks können somit auch schwer zugängliche Einsatzorte erreicht werden, welche sich auf unbefestigtem Gelände befinden. Neben dem Verfahren zwischen etwaigen Einsatzorten zur Herstellung der Fertigteile können somit auch bereits hergestellte und noch in der Schalung befindliche Fertigteile an den Ort ihres Einbaus oder ihres Aufstellens verbracht werden. Dies ist insbesondere dann vorteilhaft, wenn kein geeignetes Hebezeug mit ausreichendem Aktionsradius vor Ort vorhanden oder einsetzbar ist, um die Fertigteile weit genug zu verlagern.

In einer vorteilhaften Weiterbildung ist das den oder die Schaltische lagernde Tragwerk so ausgebildet, dass dieses durch Auseinanderziehen von einer Transportgröße in eine Arbeitsgröße überführt werden kann. Mit anderen Worten wird somit das Tragwerk in seinen Abmessungen verändert, wobei es bei seinem Aufenthalt innerhalb des Frachtgutcontainers möglichst platzsparend zusammengeschoben wird, während es außerhalb des Frachtgutcontainers auf seine volle oder aktuell benötigte Größe auseinandergezogen wird. Auf diese Weise wird das Tragwerk verlängert oder verkürzt. Das Tragwerk besteht hierzu aus einzelnen Elementen, die über Gelenkverbindungen miteinander gekoppelt sind.

Im Gegensatz zur Produktion von Fertigbauteilen in geschlossenen Gebäuden bietet die Verlagerung der Schaltische aus dem Frachtgutcontainer heraus die Möglichkeit, für die Trocknung der Fertigbauteile Sonnen- und Windenergie zu nutzen. Die natürliche Wärmezufuhr hat positive ökologische und ökonomische Effekte.

Die erfindungsgemäßen Schaltische weisen Gelenke auf, welche es ermöglichen, die Schaltische in einer Gebrauchsposition auf eine Breite aufzuklappen, welche die Breite des Frachtgutcontainers überschreitet. Die Aufklappbarkeit der Schaltische ermöglicht es, größere Fertigbauteile herzustellen. Darüber hinaus besteht die Möglichkeit, eine große gemeinsame Fläche aus den einzelnen Schaltischen zu erstellen, was eine hohe Varianz hinsichtlich der Größe der Fertigbauteile ermöglicht. Mit dem Verfahren ist die Möglichkeit gegeben, eingeschossige Bungalows, ebenso wie mehrstöckige Bauwerke, z.B. Ein- und Mehrfamilienhäuser, Schulgebäude, Krankenhäuser oder andere öffentliche Einrichtungen zu erstellen. Selbstverständlich können auch Fertigbauteile für offene Strukturen, wie z.B. Zäune hergestellt werden.

Eine andere erfindungsgemäße Möglichkeit zur Vergrößerung der Schaltische ist über externe Module gegeben, durch welche ebenfalls eine Gebrauchsposition ermöglicht wird, welche die Breite des Frachtgutcontainers überschreitet. Die externen Module können beispielsweise an die Schaltischen angeschraubt und/oder auf- bzw. eingeschoben werden.

Bevorzugt sind die Schaltische auf eine Schalfläche von wenigstens 2,5 m x 2,5 m bis 5,0 m x 5,0 m ausgelegt oder erweiterbar. Insbesondere bei einer Aneinanderreihung mehrerer Schaltische können diese eine gesamte Schalfläche von 5,0 m x 10,0 m bis 5,0 m x 50,0 m ermöglichen. Im letzteren Fall ist das Tragwerk derart verlängerbar, dass insgesamt 10 der das Raster 5,0 m x 5,0 m aufweisenden Schaltische darauf gelagert werden können.

Durch ein Zusammenschalten der einzelnen Linearantriebe können die aneinander gereihten Schaltische gleichzeitig in dieselbe Richtung geneigt werden, um somit auch das Ausschalen großer Fertigbauteile durch deren Aufrichten zu ermöglichen.

Selbstverständlich können auch hierbei einzelne Schaltische in voneinander abweichende richtungen oder gar nicht geneigt werden. Dies hängt von den jeweiligen Dimensionen der herzustellenden Fertigbauteile ab.

Hierfür wird das Tragwerk zunächst auf die notwendige Größe verlängert und die erforderliche Anzahl der Schaltische darauf gelagert. Bei Bedarf werden die Schaltische über die zuvor aufgezeigten Möglichkeiten in Bezug auf ihre jeweilige Schalfläche erweitert. Anschließend werden diese beispielsweise über lösbare Bolzen an einer der horizontalen Achsen mit dem Tragwerk gekoppelt, um welche herum der jeweilige Schaltisch geneigt werden soll. Weiterhin werden die Linearantriebe jeweils zwischen Schaltisch und Tragwerk angeordnet und lösbar mit diesen gekoppelt. Die erforderliche Ansteuerung der Linearantriebe erfolgt durch deren gesamte oder teilweise Kopplung untereinander.

Die Fertigungsanlage kann derart in den Frachtcontainer verbracht werden, dass zunächst die Schaltische entfernt und bei Bedarf zusammengeklappt und/oder die externen Module entfernt werden. Anschließend wird das Tragwerk zusammengeschoben und in den Frachtcontainer eingestellt. Abschließend werden die einzelnen Schaltische auf dem Tragwerk gestapelt und die etwaigen externen Module ebenfalls in den Frachtcontainer verbracht.

Die Bedienung des Schaltisches und die Montage der fertigen Bauteile ist einfach und rasch erlernbar. Schon nach relativ kurzen Einweisungen und kurzen Einarbeitungszeiten können die meisten Arbeiten eigenständig von ortsansässigem Personal ausgeführt werden.

Weiterhin zählt eine Fertigungsanlage zu der Erfindung, welche zur Herstellung von Fertigbauteilen aus mineralisch gebundenen Baustoffen dient. Die Fertigungsanlage umfasst mindestens einen Schaltisch, welcher zum Gießen der Fertigbauteile aus mineralisch gebundenen Baustoffen vorgesehen ist. Der Schaltische ist auf einem Tragwerk gelagert, das zusammen mit dem Schaltisch in einen Frachtgutcontainer zum Verwendungsort der Fertigbauteile, d.h. in der Regel zum Errichtungsort des zu erbauenden Gebäudes/Bauwerks transportierbar ist und vor Ort aus dem Frachtgutcontainer heraus verlagerbar und insbesondere heraus fahrbar ist.

Die Fertigungsanlage ist für mineralische Baustoffe aller Art geeignet. Vorteilhafterweise hat der Frachtgutcontainer die handelsübliche Maßeinheit von einem 20- und/oder 40-Fuß-Container, welcher auch problemlos per Luftweg oder Seeweg transportiert werden kann.

Das Tragwerk besitzt besonders bevorzugt Rollen, welche auf Schienen verfahrbar sind. Die Schienen werden in dem Frachtgutcontainer mitgeführt. Es ist erfindungsgemäß vorgesehen, dass ein Transportweg der Schaltische von bis zu 40 m ermöglicht wird.

Grundsätzlich ist es aber auch denkbar, die Schaltische ohne Schienen/Roll-System auszustatten und die Schaltische durch Hubstapler oder über ein hydraulisches strornunabhängiges Pumpsystem aus dem Frachtgutcontainer zu transportieren.

In einer Weiterbildung der Erfindung besitzt das Tragwerk ein Fahrwerk, über welches das Tragwerk zusammen mit dem mindestens einen Schaltisch verfahrbar ist. Mit diesem Fahrwerk ist nicht das Schienen/Rollen-System gemeint, mit welchem die Schaltische aus dem Container herausfahrbar sind. Das Fahrwerk dient der von Schienen ungebundenen Fortbewegung. Bei dem Fahrwerk kann es sich beispielsweise um ein Radfahrwerk oder einen Raupenantrieb handeln. Der Raupenantrieb bringt als Kettenfahrwerk den Vorteil mit sich, dass dieser auch auf unwegsamem Gelände einsetzbar ist. Besonders bevorzugt ist das Fahrwerk angetrieben, beispielsweise über einen Elektromotor oder einen Verbrennungsmotor. Auf diese Weise sind auch größer dimensionierte Schaltische und somit größere Fertigbauteile mit entsprechendem Gewicht problemlos verfahrbar.

In einer vorteilhaften Ausgestaltung weist das Tragwerk Längsträger auf, welche sowohl zum Verlängern als auch zum Verkürzen des Tragwerks zumindest abschnittsweise translatorisch gegeneinander verlagerbar sind.

Die Längsträger können dabei sowohl seitlich aneinander oder ineinander geführt sein. Dabei können die Längsträger einen seitlich offenen oder in sich geschlossenen Querschnitt aufweisen, um die erforderliche Längenänderung des Tragwerks zu ermöglichen.

In einer Weiterentwicklung ist vorgesehen, dass das Tragwerk einzelne Streben umfasst, welche die Längsträger des Tragwerks auskreuzen. Um insbesondere in Kombination mit den ineinanderschiebbaren Längsträgern ein variables und dennoch ausreichend ausgesteiftes System zu erhalten, ist vorgesehen, dass wenigstens einige dieser Streben in sich verkürzbar und/oder verlängerbar sind.

Auf diese Weise kann das Tragwerk von einer Transportposition in eine Abeitsposition auseinandergezogen werden, ohne dass etwaige Elemente gelöst oder befestigt werden müssen. Im Ergebnis wird so eine überaus schnelle Einsatzbereitschaft der Fertigungsanlage erzielt.

Zu jedem Schaltisch gehört eine individuelle Rahmenschalung, die es ermöglicht Schalungen herzustellen, die in ihrer Höhe und Breite variabel sind. Zu den individuellen Rahmenschalungen gehören außerdem Aufsatzschalungen für Dämmungen oder Fenster- und Türschalungen (Nass- in Nass-Verfahren) sowie Nutenschalungen zur Verlegung von Wasser- und Elektrizitätsrohren. Durch die individuelle Rahmenschalung wird eine sehr genaue Definition der gewünschten Materialstärke ermöglicht. Darüber hinaus kann eine genau definierte zweite Schicht, z.B. eine Dämmschicht aufgebracht werden.

In den individuellen Rahmenschalungen können auch direkt vor Ort die Mischung aus mineralisch gebundenen Baustoffen hergestellt werden. Nutzt man hierfür beispielsweise heimische Rohstoffe, so bringt dies aufgrund der wegfallenden Transportwege eine erhebliche CO₂- Ersparnis mit sich.

Die Schaltische weisen Gelenke auf über welche sie auf eine Breite ausgeklappt werden können, welche die Breite des Frachtgutcontainers deutlich überschreitet.

Ebenso ist aber auch möglich, dass die Vergrößerung der Schaltische durch Verwendung von externen Modulen erfolgt, mittels welcher die Schaltische auf eine Breite vergrößerbar sind, welche die Breite des Frachtgutcontainers deutlich überschreitet.

Die Schaltische sind an dem Tragwerk verschwenkbar gelagert. Durch die Verschwenkbarkeit um eine horizontale Achse können verschiedene Arbeitswinkel des Schaltisches eingestellt werden.

Schwenklager dienen dazu, den jeweiligen Schaltisch aus seiner horizontalen Position heraus aufzurichten, indem der Schaltisch um wenigstens eines, bevorzugt um wenigstens zwei der Schwenklager herum neigbar ist. Die Schwenklager sind hierfür so ausgebildet und angeordnet, dass die Schaltische um wenigstens zwei parallel zueinander verlaufende horizontale Achsen in voneinander unterschiedliche Richtungen um einen Neigungswinkel neigbar sind.

Der mögliche Neigungswinkel kann dabei von 0° bis 89° betragen.

Um eine komfortable und praxisgerechte Herstellung sowie ein möglichst zweckmäßiges Aufrichten sowie Ausschalen der Fertigteile zu ermöglichen, kann wenigstens einer der Schaltische eine Drehlagerung umfassen, so dass ein Schaltisch um eine senkrecht zu seiner Schalfläche verlaufende Rotationsachse rotierbar ist.

Hierdurch kann im Bedarfsfall die gesamte Schalfläche in ihrer Ebene gedreht werden, um eine praktikable Ausrichtung des Schaltisches beispielsweise gegenüber den örtlichen Gegebenheiten zu realisieren.

Die Schaltische umfassen sowohl Längsprofile als auch Querprofile sowie schräg zu diesen verlaufende Kreuzprofile. Diese Profile bilden eine Unterkonstruktion des jeweiligen Schaltisches, auf welcher die eigentliche Schalfläche angeordnet ist. Die Unterkonstruktion dient zur notwendigen Aussteifung des Schaltisches, insbesondere der Schalfläche. In vorteilhafter Weise sind die schräg verlaufenden Kreuzprofile in einem gemeinsamen Knotenpunkt miteinander verbunden. Bevorzugt erstrecken sich die Kreuzprofile zwischen den jeweiligen Eckbereichen der Unterkonstruktion zu dem Knotenpunkt hin. Dabei können die Kreuzprofile sich in dem Knotenpunkt schneiden.

Es ist vorgesehen, dass der Knotenpunkt im Bereich des jeweiligen Flächenschwerpunkts der Schaltische angeordnet ist.

Durch die so geschaffene Unterkonstruktion wird ein überaus stabiler Rahmen für die eigentliche Schalfläche geschaffen, welche aufgrund der schräg verlaufenden Kreuzprofile zusammen mit den Längsprofilen und Querprofilen ein Fachwerk bildet. Durch die sich hierdurch ergebenden Kraftdreiecke sind insbesondere die Eckbereiche der Schaltische in dessen Ebene und somit die flächige Geometrie der Schalfläche nahezu unverschieblich ausgebildet. Hierdurch bleibt auch im rauen Umgang mit den Gerätschaften auf einer Baustelle die Geometrie des Schaltisches auch nach vielfachem Gebrauch erhalten.

In einer vorteilhaften Weiterentwicklung ist vorgesehen, dass die Kreuzprofile jeweils einen Winkel zwischen sich und der Schalfläche der Schaltische einschließen. Somit verlaufen die Kreuzprofile nicht parallel zur Ebene der jeweiligen Schalfläche, sondern sind in einem Winkel zu dieser angeordnet. Bevorzugt öffnet sich der Winkel zum Knotenpunkt der Kreuzprofile hin.

Auf diese Weise erstreckt sich das durch die Unterkonstruktion gebildete Fachwerk unterhalb der Schalfläche des Schaltisches nicht nur in Ebene der Schalfläche, sondern auch senkrecht zu dieser. Im Ergebnis wird eine überaus steife Unterkonstruktion gebildet, welche auch bei hohen, durch das Einbringen des mineralischen Baustoffs und das Fertigbauteil selbst erzeugten Flächenpressungen eine größtmögliche Verwindungssteifigkeit der Schalfläche bietet.

Insbesondere bei Aufstellen der noch nicht vollständig ausgehärteten Fertigteile durch Neigen des Schaltisches können so wirksam unerwünschte Deformationen der Fertigteile vermieden werden, welche sich zumeist auf die Eckbereiche des Schaltisches konzentrieren. So werden die über die Flächenpressung in den Eckbereichen entstehenden Kräfte direkt abgefangen und in ihre Komponenten zerteilt, welche über die Längs- sowie Querprofile und insbesondere über die Kreuzprofile wirksam aufgenommen und weitergeleitet werden.

Zum Neigen der einzelnen Schaltische ist vorgesehen, dass deren Neigung um die jeweilige horizontale Achse über eine eingeleitete Druckkraft erfolgt. Bevorzugt ist hierfür ein Linearantrieb vorgesehen. Der Linearantrieb ist in vorteilhafter Weise zwischen dem Tragwerk und dem jeweiligen Knotenpunkt der Unterkonstruktion der Schaltische angeordnet. Der Vorteil besteht in der so erzeugbaren Krafteinleitung durch den Linearantrieb zwischen zwei in sich steifen Anordnungen der Fertigungsanlage, nämlich der Unterkonstruktion und dem Tragwerk. Hierdurch ist die Effektivität des Linearantriebs und insbesondere die Kontrolle und exakte Einstellung des erforderlichen Neigewinkels verbessert.

Insbesondere durch die Kopplung des Linearantriebs mit dem Knotenpunkt der Unterkonstruktion der einzelnen Schaltische ist eine zentrale Einleitung der aufzubringenden Druckkraft möglich, welche ohne zusätzliche Abstützungen der Schaltische auskommt. Dies wird durch die fachwerkförmige Unterkonstruktion der Schaltische realisiert, welche von dem zentralen Knotenpunkt aus eine Drucklastverteilung über die gesamte Schalfläche hinweg bewirkt. Der Vorteil liegt in einem einfachen Aufbau des notwendigen Hebemittels in Form des Linearantriebs, welcher ohne zusätzliche Komponenten auskommt.

In diesem Zusammenhang ist vorgesehen, dass der Linearantrieb lösbar mit dem jeweiligen Knotenpunkt der Schaltische und dem Tragwerk gekoppelt ist. Auf diese Weise kann der Linearantrieb bei Bedarf problemlos umgesetzt und für das Verbringen der Fertigungsanlage in den Frachtgutcontainer auch einfach ausgebaut werden. So kann der Linearantrieb je nach Richtung und somit verwendeter horizontaler Achse zum Verschwenken des Schaltisches an unterschiedlichen Bereichen des Tragwerks angekoppelt werden, um eine möglichst hohe Effektivität zu bewirken. Hierfür weist das Tragwerk mindestens zwei voneinander beabstandete Aufnahmen auf, über welche der Linearantrieb mit dem Tragwerk verbindbar ist.

Die Erfindung sieht vor, dass pro Schaltisch jeweils ein Linearantrieb vorhanden ist.

Erfindungsgemäß können auf einem Tragwerk mehrere Schaltische angeordnet sein. Vorteilig hierbei ist, dass die jeweiligen Schaltische zeitgleich verschiedene Arbeitspositionen innehaben können.

Besonders bevorzugt sind auf einem Tragwerk drei voneinander unabhängige Schaltische angeordnet. So kann beispielsweise auf einen ersten Schaltisch eine nasse Mischung aus mineralisch gebundenen Baustoffen gegeben werden, während auf einem zweiten Schaltisch die Mischung aus mineralisch gebundenen Baustoffen bereits trocknet und auf einem dritten Schaltisch zeitgleich das getrocknete Fertigbauteil entnommen wird.

In der Ausführungsform von mehreren Schaltischen auf einem Tragwerk sind die Schaltische unmittelbar benachbart. Hierdurch kann eine vergrößerte gemeinsame Arbeitsfläche geschaffen werden.

An den Schaltischen ist bevorzugt eine Skala angeordnet, um das präzise Setzen der Rahmenschalung zu vereinfachen.

Die Erfindung wird nachfolgend anhand eines in den Zeichnungen dargestellten Ausführungsbeispiels näher erläutert. Es zeigt:
- Figur 1: eine erfindungsgemäße Fertigungsanlage;
- Figur 2: die Fertigungsanlage aus Figur 1, mit aus dem Frachtgutcontainer heraus-verlagerten Schaltischen;
- Figur 3: die Schaltische auf dem auf Schienen angeordneten Tragwerk;
- Figur 4: eine Strichzeichnung eines auf einem Tragwerk gelagerten Schaltisches;
- Figur 5: eine Variante von Schaltischen in perspektivischer Darstellungsweise;
- Figur 6: eine Seitenansicht eines der Schaltische aus Figur 5;
- Figur 7: den Schaltisch aus Figur 6 in einer Variante in selber Darstellungsweise;
- Figur 8: eine Aufsicht oder Untersicht auf ein Tragwerk in einer alternativen Ausgestaltung;
- Figur 9: einen Querschnitt durch einen Bereich des Tragwerks aus Figur 8;
- Figur 10: das Tragwerk aus Figur 8 in expandierter Form in selber Darstellungsweise;
- Figur 11: das Tragwerk aus Figur 8 in einer weiteren Ausgestaltung in selber Darstellungsweise;
- Figur 12: die Fertigungsanlage aus Figur 11 in expandierter Form des Tragwerks in einer Seitenansicht;
- Figur 13: eine Frontansicht der Fertigungsanlage aus Figur 12 sowie
- Figur 14: die Fertigungsanlage aus Figur 13 im Transportzustand.

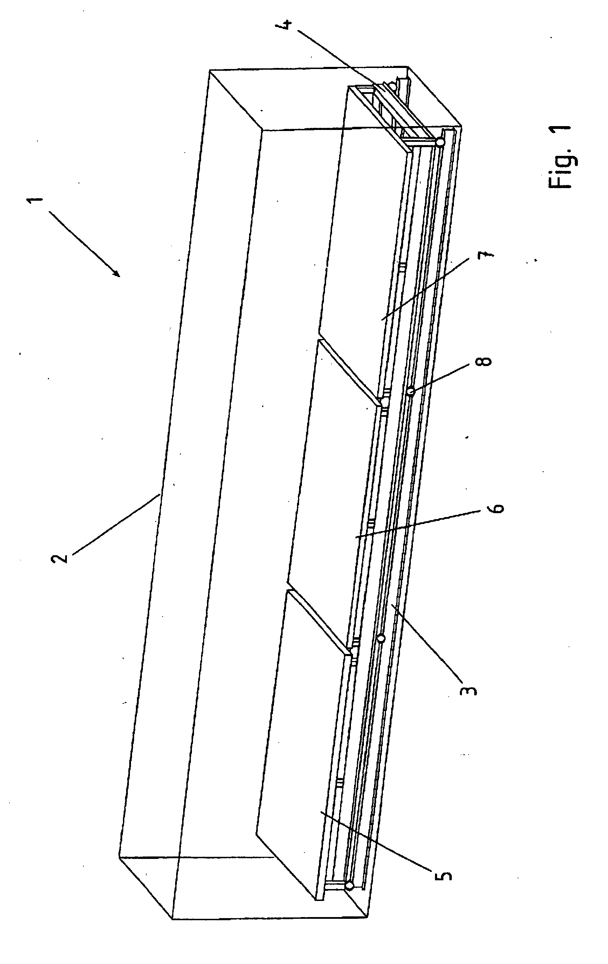

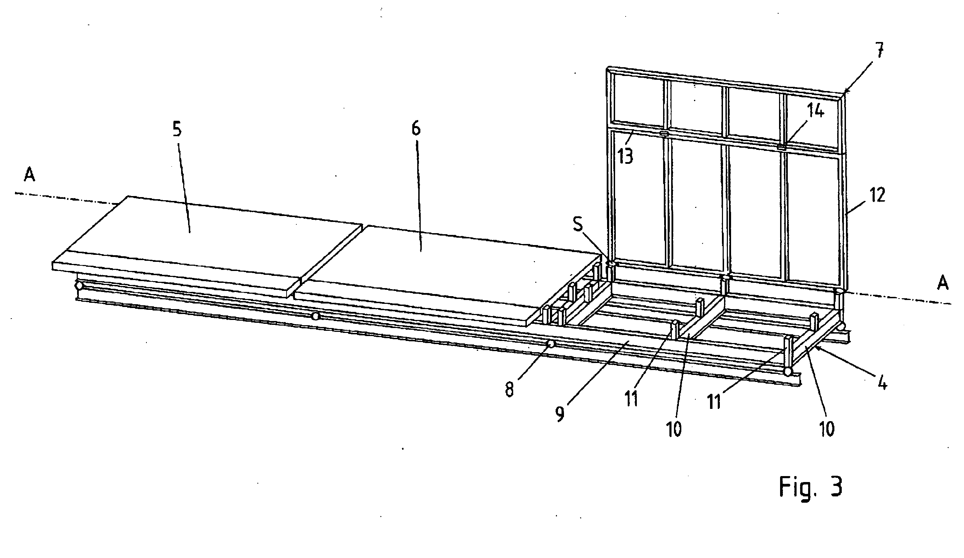

Die Figur 1 zeigt eine erfindungsgemäße Fertigungsanlage 1. Sie umfasst einen herkömmlichen Frachtgutcontainer 2. In dem Frachtgutcontainer 2 befinden sich Schienen 3 auf welchen ein verfahrbares Tragwerk 4 (Figur 3) gelagert ist. An dem Tragwerk 4 sind drei voneinander unabhängige Schaltische 5, 6, 7 angeordnet. Weiterhin sind an dem Tragwerk 4 Rollen 8 angeordnet.

Die Fertigungsanlage 1 befindet sich in Figur 1 noch nicht im Gebrauchszustand. Die Schaltische 5, 6, 7 sind eingeklappt, so dass sie problemlos in dem Frachtgutcontainer 2 gelagert werden können. In den Frachtgutcontainer 2 können bis zu 40 m Schalungslänge mit einer Schalungsbreite von bis zu 5 m transportiert werden. Bei diesem Ausführungsbeispiel beträgt die Länge knapp 40 Fuß bei einer Breite von etwa 3 m.

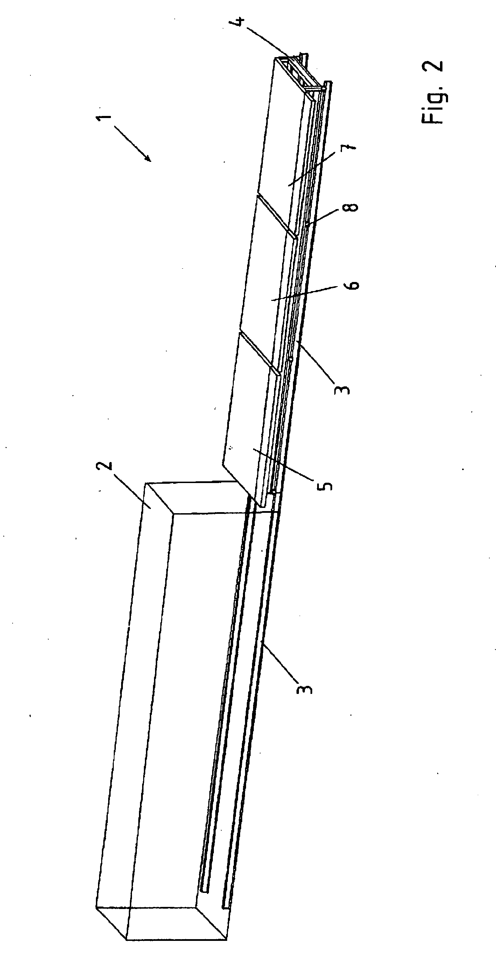

Die Figur 2 zeigt die Fertigungsanlage 1 aus der Figur 1 mit verlängerten Schienen 3, auf welchen die Tragwerke 4 mit den Schaltischen 5, 6, 7 aus dem Frachtgutcontainer 2 heraus verlagert sind. Die Schaltische 5, 6, 7 befinden sich nun im ausgeklappten Zustand. Die Schienen 3 können auch auf eine hier nicht gezeigte Länge von bis zu 40 m verlängert werden.

In der aus dem Frachtgutcontainer 2 heraus verlagerten Position können die Schaltische 5, 6, 7 direkt in Betrieb genommen werden. Die Tragwerke 4 und die Schaltische 5, 6, 7 können aber auch auf jedem anderem tragfähigem Untergrund betrieben werden. Zu diesem Zweck weisen die Tragwerke 4 und/oder die Schaltische 5, 6, 7 hier nicht gezeigte individuell verstellbare Justierspindeln auf, welche eine Abstützung auch über die Breite des Tragwerks hinaus ermöglichen.

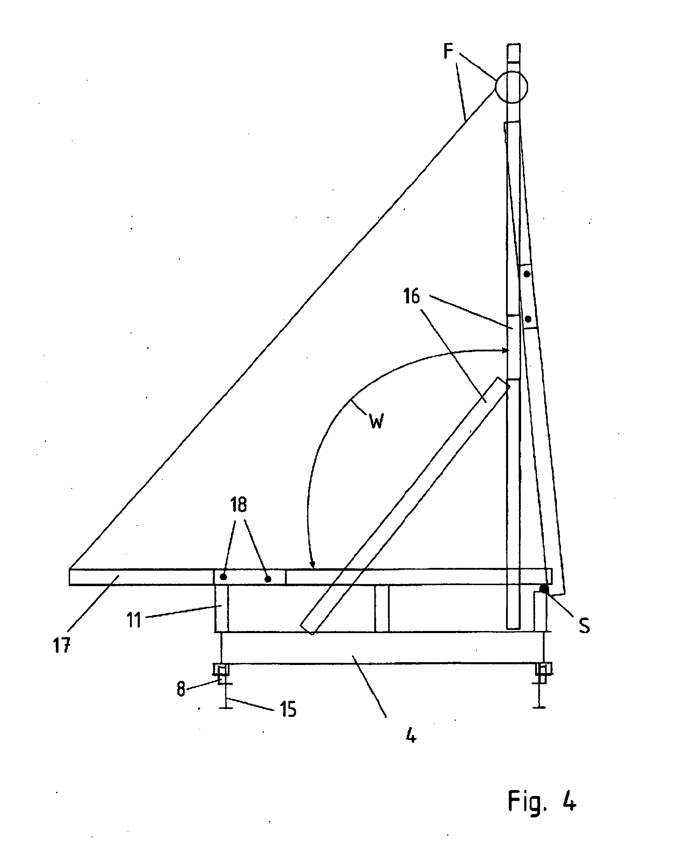

Die Figur 3 zeigt nochmals die Schienen 3, auf welchen sich das verfahrbare Tragwerk 4 befindet, an welchem wiederum die Schaltische 5, 6, 7 schwenkbar gelagert sind. Zwei der drei Schaltische 5, 6 liegen ausgeklappt in einer horizontalen Position. Der dritte Schaltisch 7 ist um eine horizontale Achse A geneigt. Das Tragwerk 4 besteht aus zwei Längsträgern 9, welche durch mehrere Querträger 10 miteinander verbunden sind. Auf den Querträgern 10 und den Längsträgern 9 befinden sich an der den Schienen 3 zugewandten Seite die Rollen 8. Auf der den Schaltischen 5, 6, 7 zugewandten Seite der Längs- und Querträger 9, 10 des Tragwerkes 4 befinden sich mehrere die Schaltische 5, 6, 7 abstützenden Beine 11. Die Schaltische 5, 6, 7 sind an jeweils drei sich auf den Längsträgern befindenden Beinen 11 über Schwenklager S schwenkbar gelagert, so dass sie um die horizontale Achse A geneigt werden können. Der Neigungswinkel W (Figur 4) beläuft sich auf maximal 85° Die Schaltische 5, 6, 7 bestehen aus mehreren Längs- und Querprofilen 12, 13. Die Schaltische 5, 6, 7 sind in Figur 3 in ausgeklapptem Zustand dargestellt. Auf den Schaltischen 5, 6, 7 können verschieden große Fertigbauteile gegossen werden. Im ausgeklappten Zustand wird der jeweilige Schaltisch 5, 6, 7 30 bis 90 % in Bezug auf seine eingeklappte Größe vergrößert, im dargestellten Fall etwa um 45 %. Das Ausklappen des ausklappbaren Teils des Schaltisches 5, 6, 7 wird über zwischen den Schaltischen 5, 6, 7 und dem Tragwerk 4 angeordnete Gelenke 14 ermöglicht. Das Schwenken selbst wird dann über hier nicht gezeigte Hydraulische Mittel oder Krananlagen vollzogen. Der hydraulische Druck kann per Hand, elektrisch, per Notstromaggregat oder durch Kupplung an eine externe Druckquelle wie z. B. einen Lastkraftwagen oder eine Baumaschine aufgebaut werden.

Die Figur 4 zeigt eine Darstellung des Schaltisches 5, 6, 7 auf dem Tragwerk 4 in horizontaler Position und in aufgerichteter Position. An dem Tragwerk 4 sind Rollen 8 angeordnet, welche auf einem Schienenprofil 15 aufliegen. Die Schienenprofile 15 befinden sich in der Bildebene ganz unten. An dem Tragwerk 4 sind die den Schaltisch 5, 6, 7 tragenden Beine 11 angeordnet. An dem in der Bildebene rechten Bein 11 befindet sich das Schwenklager S, über welches das Tragwerk 4 mit dem Schaltisch 5, 6, 7 gekoppelt ist. Entlang der zentrisch durch das Schwenklager S verlaufenden horizontalen Achse A ist der Schaltisch 5, 6, 7 um einen Winkel W verschwenkbar. Der Schaltisch 5, 6, 7 ist bis maximal 89° bezogen auf seine Horizontalposition verschwenkbar. An dem Schaltisch 5, 6, 7 und dem Tragwerk 4 befinden sich hier nicht gezeigte Aufnahmevorrichtungen für Joche 16 aus Stahlrohren, an welchen ein Flaschenzug F befestigt werden kann, welcher dann eine Möglichkeit zur Verschwenkbarkeit des Schaltisches 5, 6, 7 darstellt. In der hier gezeigten Ausführungsform des Schaltisches 5, 6, 7 weist dieser zur Vergrößerung seiner Breite ein externes Modul 17 auf, welches in der Bildebene links gut zu sehen ist Das externe Modul 17 ist über Verschraubungen 18 an den Schaltisch 5, 6, 7 angeschraubt.

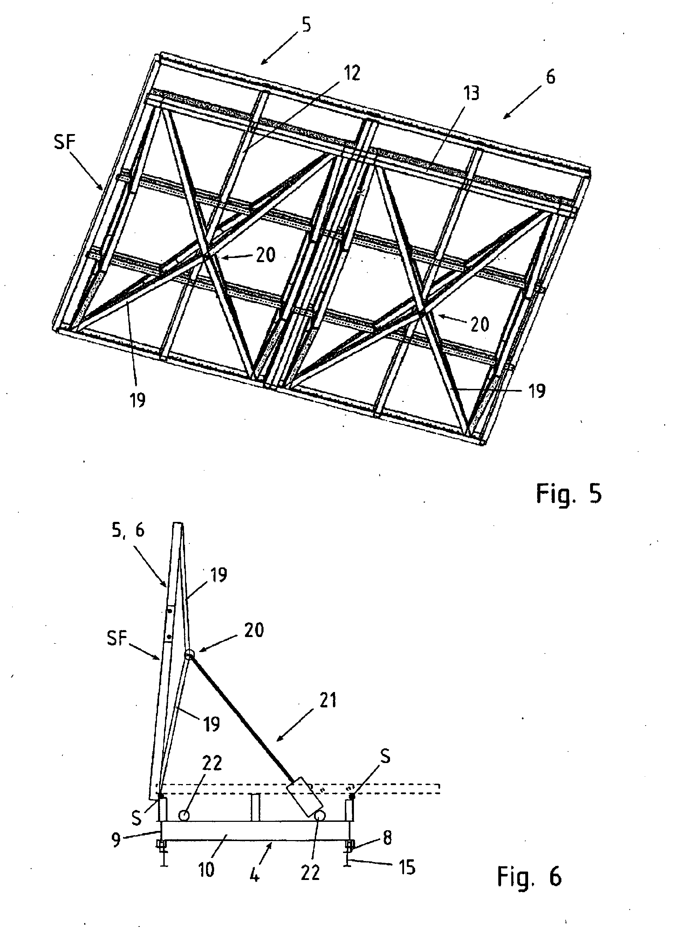

Figur 5 zeigt zwei der Schaltisch 5, 6 in einer alternativen Ausgestaltung. Die Schaltische 5, 6 umfassen sowohl die Längsprofile 12 als auch die Querprofile 13, wobei diese durch schräg zu diesen verlaufende Kreuzprofile 19 ergänzt sind. Die Kreuzprofile 19 sind in einem gemeinsamen Knotenpunkt 20 miteinander verbunden. Der Knotenpunkt befindet sich im Bereich des Flächenschwerpunktes der jeweiligen Schaltische 5, 6.

Gegenüber den parallel zur jeweiligen Schalfläche SF der Schaltische 5, 6 verlaufenden Längs- und Querprofilen 12, 13 schließen die Kreuzprofile 19 jeweils einen Winkel zwischen sich und der jeweiligen Schalfläche SF der Schaltische 5, 6 ein, welcher sich zum Knotenpunkt 20 hin öffnet.

Figur 6 veranschaulicht schematisch den Aufbau der alternativen Schaltische 5, 6 aus Figur 5 in einer Seitenansicht. Wie zu erkennen, ist zwischen dem Tragwerk 4 und dem Knotenpunkt 20 des Schaltisches 5 ein Linearantrieb 21 in Form eines Hubzylinders zum Verschwenken des Schaltisches 5 angeordnet. Bei dem Linearantrieb 21 handelt es sich bevorzugt um einen mehrstufigen Hubzylinder, um möglichst kompakte Abmessungen zu erhalten.

Weiterhin weist das Tragwerk 4 zwei gegenüberliegende Schwenklager S auf, so dass der Schaltisch 5 bei Bedarf in unterschiedliche Richtungen geneigt werden kann. Hierfür ist der Schaltisch 5 in nicht näher dargestellter Weise über lösbare Bolzen an nur einer der beiden Seiten der Schwenklager S mit diesen gekoppelt, so dass das jeweils gegenüberliegende Schwenklager S keine Kopplung mit dem Schaltisch 5 aufweist.

Der Linearantrieb 21 ist lösbar mit dem Knotenpunkt 20 des Schaltisches 5 und dem Tragwerk 4 gekoppelt. Hierfür weist insbesondere das Tragwerk 4 zueinander beabstandete Aufnahmen 22 auf, mit welchen der Linearantrieb 21 wahlweise koppelbar ist. Bevorzugt sind die Aufnahmen 22 als kardanische Lagerung ausgebildet.

Die wahlweise Kopplung mit einer der Aufnahmen 22 ist von der Richtung der Neigung des Schaltisches 5 abhängig. Sofern eine mit Blick auf die Darstellung der Figur 6 um das linke Schwenklager S erfolgende Neigung des Schaftisches 5 erfolgen soll, wird der Linearantrieb 21 über die rechte Aufnahme 22 mit dem Tragwerk 4 gekoppelt, wie dargestellt. Sofern eine Neigung um das rechts dargestellte Schwenklager S erfolgen soll, wird der Linearantrieb 21 über die linke Aufnahme 22 mit dem Tragwerk 4 gekoppelt. Theoretisch ist auch eine Position in der Mitte möglich, so dass das untere Ende des Linearantriebs 21, näherhin dass mit der Aufnahme 22 gekoppelte Ende nicht verlagert werden muss.

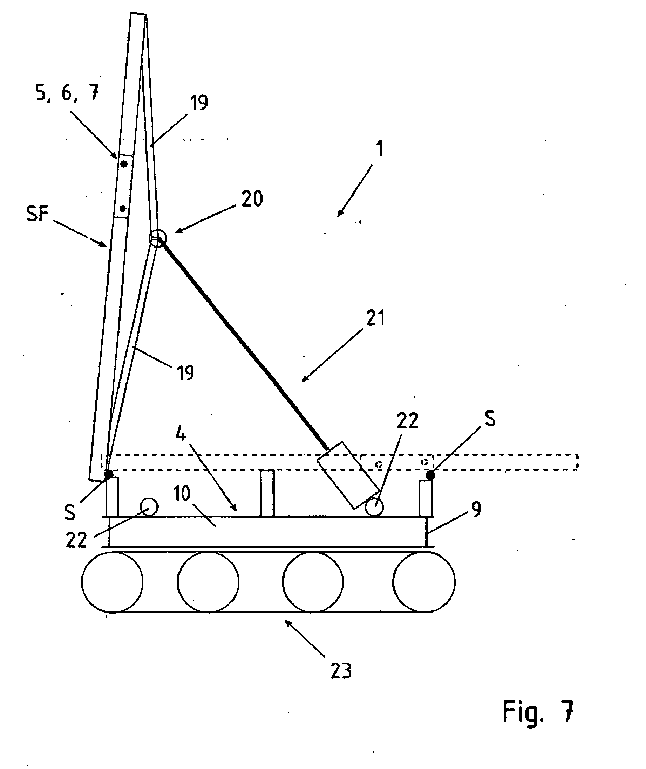

Figur 7 zeigt eine alternative Ausgestaltung einer Fertigungsanlage 1. Um eine möglichst autarke Mobilität des jeweiligen Schaltisches 5, 6, 7 zu ermöglichen, besitzt das Tragwerk 4 ein Fahrwerk 23. Das Fahrwerk 23 ist vorliegend als Raupenfahrwerk ausgebildet. Über das Fahrwerk 23 ist das Tragwerk 4 zusammen mit mindestens einem der Schaltische 5, 6, 7 auf geeignetem und nicht näher dargestelltem Untergrund verfahrbar.

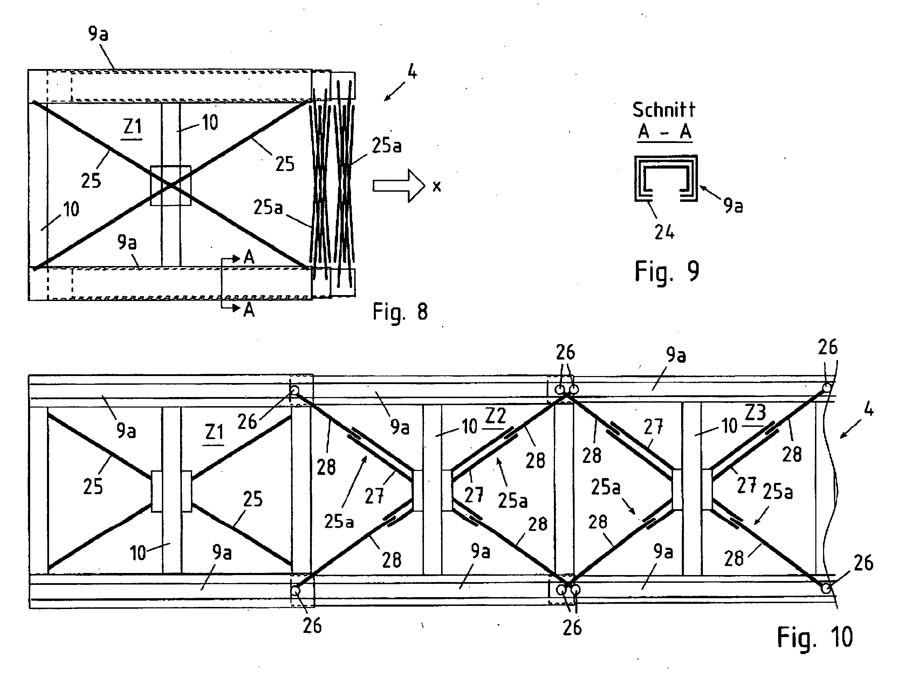

Figur 8 zeigt eine alternative Ausgestaltung des Tragwerks 4. In der schematischen Darstellung sind parallel zueinander verlaufende Längsträger 9a zu erkennen, welche schussweise ineinander geschoben sind.

Figur 9 verdeutlicht in einem Schnitt A - A die Anordnung der ineinander angeordneten Längsträger 9a. Bei den Längsträgern 9a handelt es sich um C-Profile. Die ineinander angeordneten Längsträger 9a weisen unterschiedliche Querschnittsgrößen auf, wodurch mehrere, vorliegend drei Längsträger 9a ineinander gesteckt sind. An den Enden ihrer Schenkel weisen die Längsträger 9a senkrecht zu diesen sowie einander zugewandte Stege 24 auf, so dass der jeweils äußere Längsträger 9a den jeweils darin angeordneten Längsträger 9a dreiseitig umklammert, während die vierte Seite bereichsweise durch die Stege 24 umgriffen ist. Die Stege 24 sind so dimensioniert, dass deren übereinander liegenden Enden miteinander fluchten.

Mit Blick zurück auf Figur 8 sind neben den die Längsträger 9a verbindenden Querträgern 10 diagonal verlaufende Streben 25 angeordnet. Die Streben 25 kreuzen einen Abschnitt des vorliegend in sich zusammengeschobenen Tragwerks 4 aus. Der Vorteil besteht darin, dass eine mögliche Verschieblichkeit des jeweils durch die Längsträger 9a und die Querträger 10 gebildeten Rahmens durch die Streben 25 wirksam verhindert wird.

In der vorliegende Anordnung kann das auf ein Drittel seiner sich in Richtung der Längsträger 9a erstreckenden Gesamtlänge zusammengeschobene Tragwerk 4 einen hier nicht näher dargestellten Schaltisch 5, 6, 7 durch dessen Auflagern tragen. Bei dem in Figur 8 abgebildeten Teil des Tragwerks 4 handelt es sich um dessen feststehenden Abschnitt Z1.

Darüber hinaus weist das Tragwerk 4 weitere Streben 25a auf, welche im vorliegend zusammengeschobenen Zustand des Tragwerks 4 einen deutlich kleineren Winkel zwischen sich einschließen, als die den vorhandenen Abschnitt des Tragwerks 4 auskreuzenden Streben 25. Die Streben 25a sind in nicht näher dargestellter Weise mit den einzelnen Längsträgern 9a beweglich gekoppelt. Jede der Streben 25a erstreckt sich dabei zwischen den in unterschiedliche Richtungen weisenden Endbereichen zweier parallel zueinander verlaufenden Längsträgern 9a. Dabei ist die jeweilige Strebe 25a mit einem seiner Enden mit einem Endbereich eines Längsträgers gekoppelt, während das andere Ende der Strebe 25a mit einem parallel dazu verlaufenden Längsträger 9a gekoppelt ist, welcher allerdings einem benachbarten Abschnitt des Tragwerks 4 zugehörig ist.

Um das Tragwerk 4 beispielsweise auf seine volle Länge zu vergrößern, werden die ineinander angeordneten Längsträger 9a schussweise in eine Expansionsrichtung x des Tragwerks 4 auseinander gezogen.

Figur 10 zeigt das auf seine volle Länge expandierte Tragwerk 4 aus Figur 8. Hierdurch weist das Tragwerk 4 neben seinem feststehenden Abschnitt Z1 sich daran anschließende variable Abschnitte Z2, Z3 auf, welche ebenfalls der Aufnahme sowie Lagerung nicht näher dargestellter Schaltische 5, 6, 7 dienen.

Wie zu erkennen, erfahren die Streben 25a während der Verlängerung des Tragwerks 4 in dessen Expansionsrichtung x eine Längenänderung. Diese resultiert aus der sich beim Auseinanderziehen der Längsträger 9a ergebenden Entfernung von Ankerpunkten 26, welche an den jeweiligen Längsträgern 9a angeordnet sind und zwischen denen sich die Streben 25a diagonal erstrecken. Die Streben 25a sind mit ihren Enden an den Ankerpunkten 26 festgelegt.

Die Streben 25a sind so ausgebildet, dass sie eine Längenänderung zulassen. Hierfür weist jede der Streben 25a einen Strebenkörper 27 auf, in weichen zu beiden seiner Enden hin jeweils Langelemente 28 angeordnet sind. Die Langelemente 28 fluchten mit den jeweiligen Strebenkörper 27. In einer anderen Ausführungsform kann jede der Streben 25a auch nur einen Strebenkörper 27 mit einem einzelnen Langelement 28 aufweisen.

Die Langelemente 28 können in den Strebenkörpern 27 geführt sein, indem die Strebenkörper 27 hohl, beispielsweise als Rundrohr oder als im Querschnitt eckiges Rohr ausgebildet sind. Selbstverständlich können auch die Langelemente 28 entsprechend hohl ausgebildet sein und so den Strebenkörper 27 in sich aufnehmen.

Die Verbindung zwischen Strebenkörper 27 und Langelementen 28 ist so ausgebildet, dass zwischen ihnen Zugkräfte übertragbar sind. Je nach Anforderung können die Strebenkörper 27 sowie Langelementen 28 auch so ausgebildet sein, dass zwischen ihnen Druckkräfte übertragbar sind. Die Kopplung zwischen den Strebenkörpern 27 sowie Langelementen 28 ist sowohl lösbar als auch arretierbar. Hierdurch können die Längsträger 9a problemlos auseinandergezogen werden, wenn die Kopplung der Strebenkörper 27 mit den Langelementen 28 gelöst ist. Sobald die Längsträger 9a auf die erforderlichen Abmessungen des Tragwerks 4 auseinandergezogen sind, wird die Kopplung zwischen den Strebenkörpern 27 und den Langelementen 28 arretiert, so dass eine stabile Auskreuzung der variablen Abschnitte Z2, Z3 erfolgt.

Durch die zuvor aufgezeigte Ausgestaltung der Streben 25a kann das Tragwerk 4 auch mehr als die hier aufgezeigten drei Abschnitte Z1, Z2, Z3 besitzen. Die Anordnung der in sich stauch- sowie längbaren Streben 25a in Kombination mit den ineinanderschiebbaren Längsträgern 9a bietet eine überaus einfache Möglichkeit, ein Tragwerk 4 innerhalb kürzester Zeit auf die erforderliche Länge zu expandieren, ohne dass hierfür das Lösen oder Anordnen einzelner Bauteile nötig ist. Je nach Ausgestaltung der Arretierung zwischen den Strebenkörpern 27 und den Langelementen 28 ist das Tragwerk 4 zudem stufenlos expandierbar, so dass ein hohes Maß an Flexibilität erreicht wird.

Trotz der überaus einfachen Handhabung wird hierdurch ein überaus sicheres System für den Aufbau einer erfindungsgemäßen Fertigungsanlage 1 geschaffen, welches mit nur wenigen Handgriffen ein wirksam ausgesteiftes und an die örtlichen Erfordernisse anpassbares Tragwerk 4 bietet.

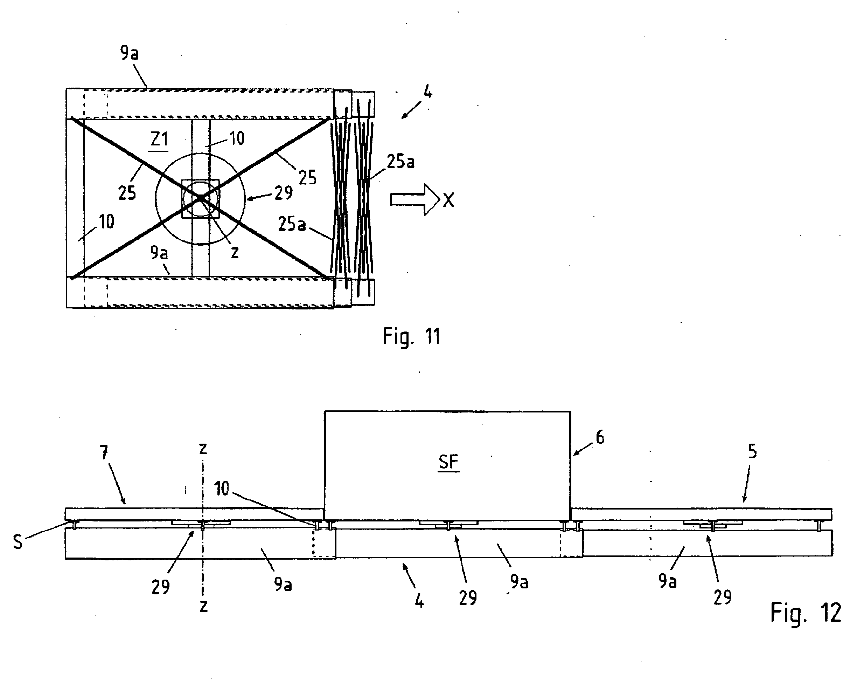

Figur 11 zeigt das zusammengeschobene Tragwerk 4 aus Figur 8 in einer weiteren Variante. Wie zu erkennen, weist dieses vorliegend in seinem feststehenden Abschnitt Z1 eine Drehlagerung 29 auf. Die Drehlagerung 29 ist an dem Querträger 10 angeordnet.

Selbstverständlich kann die Drehlagerung auch an wenigstens einem der hier nicht näher dargestellten Schaltische 5, 6, 7 angeordnet sein. Durch die Drehlagerung 29 ist wenigstens einer der hier nicht näher dargestellten Schaltische 5, 6, 7 um eine senkrecht zu seiner Schalfläche (SF) verlaufende Rotationsachse (z) rotierbar (siehe auch Figur 12).

Figur 12 zeigt das in Expansionsrichtung x auseinandergezogene Tragwerk 4 in einer Seitenansicht. In dieser Darstellung weist jeder der Schaltische 5, 6, 7 eine Drehlagerung 29 auf. Weiterhin ist der mittlere Schaltisch 6 aus seiner waagerechten Position heraus verschwenkt, näherhin aufgestellt.

Das Auseinanderziehen des Tragwerks 4 in Expansionsrichtung x kann sowohl händisch als auch motorisch erfolgen. So kann beispielsweise eine Art Flaschenzug innerhalb oder außerhalb der Längsträger 9a angeordnet sein, so dass durch Ziehen eines Zugmittels eine entsprechende Verlängerung oder Verkürzung des Tragwerks 4 erfolgen kann. Weiterhin sind auch Antriebe in Form von Hubzylindern, Zahnstangen- oder Drehspindelantrieben denkbar. Bevorzugt sind die Längsträger 4 so ineinander geführt, dass diese ein nur geringes Spiel aufweisen, welches zur spannungsfreien Verschiebung der Längsträger 9a ineinander notwendig ist.

Durch die aus den sich im Querschnitt voneinander unterscheidenden Längsträgern 9a resultierende Abtreppung des oberen Verlaufs des Tragwerks 4 kann durch nicht näher dargestellte Ausgleichselemente ausgeglichen werden. Diese Ausgleichselemente können beispielsweise zwischen den Längsträgern oder den Querträgern und den jeweiligen Schaltischen 5, 6, 7 sowie deren Unterkonstruktion angeordnet sein.

Grundsätzlich können zwischen den Schaltischen 5, 6, 7 und dem Tragwerk 4 nicht näher dargestellte Nivellierelemente angeordnet sein. Bei den Nivellierelementen kann es sich beispielsweise um Schraubelemente handeln, durch deren Verdrehen eine höhenmäßige Ausrichtung der Schaltische 5, 6, 7 gegenüber der Tragwerk 4, insbesondere dem jeweiligen Untergrund möglich ist.

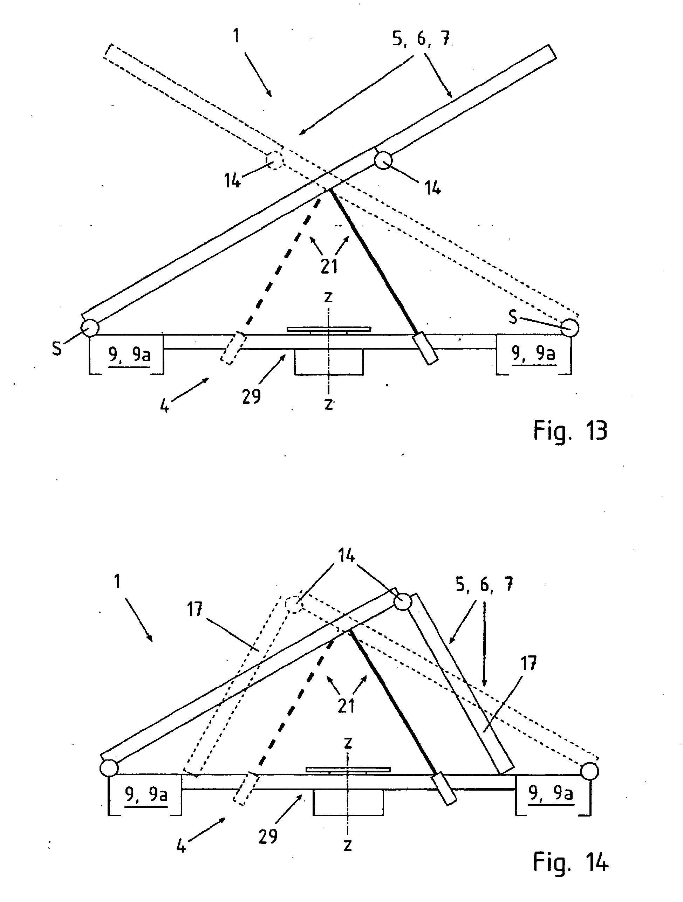

Figur 13 zeigt innerhalb einer Darstellung die möglichen Richtungen des Verschwenkens der Schaltische 5, 6, 7 der Fertigungsanlage 1. Wie zu erkennen, können die Schaltische 5, 6, 7 über die an beiden Längsseiten des Tragwerks 4 angeordnete Schwenklager S geneigt werden, wodurch sich die jeweilige Aufstellrichtung der Schaltische 5, 6, 7 ändern lässt. Beim Neigen der Schaltische 5, 6, 7 ist die Wirkung des Gelenks 14 aufgehoben, beispielsweise über eine geeignete Verriegelung. Je nach Neigerichtung wird der Linearantrieb 21 entsprechend umgesetzt, um ein Aufstellen der Schaltische 5, 6, 7 in die gewünschte Richtung zu ermöglichen.

Figur 14 zeigt den Zustand der Fertigungsanlage 1 zu deren Verlagerung in den hier nicht näher dargestellten Frachtgutcontainer 2. Hierfür werden die Schaltische 5, 6, 7 so weit geneigt, dass die über die Gelenke 14 mit den Schaltischen 5, 6, 7 verbundenen Module 17 abgeklappt werden können. Ziel ist es, die durch die Module 17 erreichte Breite der Schaltische 5, 6, 7 so weit zu reduzieren, dass die gesamte Fertigungsanlage 1 maximal der lichten Breite des Innenraums des Frachtgutcontainers 2 entspricht. Auf diese Weise kann die eine deutlich größere Schalfläche SF aufweisende Fertigungsanlage 1 durch entsprechende Verlagerung der Schaltische 5, 6, 7 und der Module 17 auf eine kompakte Größe reduziert werden, um innerhalb des Frachtgutcontainers 2 transportiert zu werden.

### Bezugszeichen:

1 - Fertigungsanlage
2 - Frachtgutcontainer
3 - Schienen
4 - Tragwerk
5 - Schaltisch
6 - Schaltisch
7 - Schaltisch
8 - Rollen
9 - Längsträger
10 - Querträger
11 - Beine
12 - Längsprofil
13 - Querprofil
14 - Gelenk
15 - Schienenprofil
16 - Joche
17 - Module .
18 - Verschraubungen
19 - Kreuzprofil
20 - Knotenpunkt
21 - Linearantrieb
22 - Aufnahme
23 - Fahrwerk
24 - Steg
25 - Strebe
25a - Strebe
26 - Ankerpunkt
27 - Strebenkörper
28 - Langelement
29 - Drehlager
A - horizontale Achse
F - Flaschenzug
W - Winkel
S - Schwenklager
SF - Schalfläche
x - Expansionsrichtung
Z1 - Abschnitt, feststehend
Z2 - Abschnitt, variabel
Z3 - Abschnitt, variabel
z - Rotationsachse

## Patentansprüche

1. Fertigungsanlage zur Herstellung von Fertigbauteilen aus mineralisch gebundenen Baustoffen, wobei die Fertigungsanlage (1) einen Frachtgutcontainer (2), ein Tragwerk (4) und mindestens einen Schaltisch (5, 6, 7) umfasst,
wobei der Schaltisch (5, 6, 7) zum Gießen der Fertigbauteile aus mineralisch gebundenen Baustoffen vorgesehen und auf dem Tragwerk (4) gelagert ist,
wobei das Tragwerk (4) zusammen mit dem Schaltisch (5, 6, 7) in dem Frachtgutcontainer (2) zum Verwendungsort der Fertigbauteile transportierbar ist,
wobei das Tragwerk (4) zusammen mit dem Schaltisch (5, 6, 7) am Verwendungsort aus dem Frachtgutcontainer (2) heraus verlagerbar ist,
**dadurch gekennzeichnet daß** das Tragwerk (4) Längsträger (9a) aufweist, welche sowohl zum Verlängern als auch zum Verkürzen des Tragwerks (4) zumindest abschnittsweise translatorisch gegeneinander verlagerbar sind.

2. Fertigungsanlage nach Anspruch 1, **dadurch gekennzeichnet, dass** das Tragwerk (4) Rollen (8) aufweist und am Verwendungsort auf auf dem Untergrund liegenden Schienen (3) verfahrbar ist, und dass die Schienen (3) mit dem Frachtgutcontainer (2) mitführbar sind.

3. Fertigungsanlage nach Anspruch 1 oder 2, **dadurch gekennzeichnet, dass** das Tragwerk (4) ein Fahrwerk (23) besitzt, über welches das Tragwerk (4) zusammen mit dem mindestens einen Schaltisch (5, 6, 7) verfahrbar ist.

4. Fertigungsanlage nach einem der Ansprüche 1 bis 3, **dadurch gekennzeichnet, dass** das Tragwerk (4) einzelne Streben (25, 25a) umfasst, die die Längsträger (9a) des Tragwerks (4) auskreuzen, wobei wenigstens einige der Streben (25a) in sich verkürzbar und/oder verlängerbar sind.

5. Fertigungsanlage nach einem der Ansprüche 1 bis 4, **dadurch gekennzeichnet, dass** der Schaltisch (5, 6, 7) Gelenke (14) aufweist und auf eine Breite ausklappbar ist, die größer ist als die Breite des Frachtgutcontainers (2).

6. Fertigungsanlage nach einem der Ansprüche 1 bis 5, **dadurch gekennzeichnet, dass** der Schaltisch (5, 6, 7) Aufnahmen für externe Module (18) aufweist, über welche der Schaltisch (5, 6, 7) auf eine Breite vergrößerbar ist, die größer ist als die Breite des Frachtgutcontainers (2).

7. Fertigungsanlage nach einem der Ansprüche 1 bis 6, **dadurch gekennzeichnet, dass** der Schaltisch (5, 6, 7) verschwenkbar an dem Tragwerk (4) gelagert ist.

8. Fertigungsanlage nach einem der Ansprüche 1 bis 7, **dadurch gekennzeichnet, dass** das Tragwerk (4) Schwenklager (S) umfasst, über welche der Schaltisch (5, 6, 7) an dem Tragwerk (4) gelagert ist, wobei die Schwenklager (S) so ausgebildet und angeordnet sind, dass der Schaltisch (5, 6,7) um wenigstens zwei parallel zueinander verlaufende horizontale Achsen (A) in voneinander unterschiedliche Richtungen um einen Neigungswinkel (W) neigbar ist.

9. Fertigungsanlage nach einem der Ansprüche 1 bis 8, **dadurch gekennzeichnet, dass** der Schaltisch (5, 6, 7) eine Drehlagerung (29) umfasst, so dass der Schaltisch (5, 6, 7) um eine senkrecht zu seiner Schalfläche (SF) verlaufende Rotationsachse (z) rotierbar ist.

10. Fertigungsanlage nach einem der Ansprüche 1 bis 9, **dadurch gekennzeichnet, dass** der Schaltisch (5, 6, 7) sowohl Längsprofile (12) als auch Querprofile (13) sowie schräg zu diesen verlaufende Kreuzprofile (19) umfasst, welche in einem gemeinsamen Knotenpunkt (20) miteinander verbunden sind, wobei die Kreuzprofile (19) vorzugsweise jeweils einen Winkel zwischen sich und der Schalfläche (SF) des Schaltisches (5, 6, 7) einschließen, welcher sich zum Knotenpunkt (20) hin öffnet.

11. Fertigungsanlage nach Anspruch 10, **dadurch gekennzeichnet, dass** zwischen dem Tragwerk (4) und dem jeweiligen Knotenpunkt (20) des Schaltisches (5, 6, 7) ein Linearantrieb (21) zum Verschwenken des Schaltisches (5, 6, 7) angeordnet ist.

12. Fertigungsanlage nach Anspruch 11, **dadurch gekennzeichnet, dass** der Linearantrieb (21) lösbar mit dem jeweiligen Knotenpunkt (20) des Schaltisches (5, 6, 7) und dem Tragwerk (4) gekoppelt ist.

13. Fertigungsanlage nach einem der Ansprüche 1 bis 12, **dadurch gekennzeichnet, dass** auf einem gemeinsamen Tragwerk (4) mehrere Schaltische (5, 6, 7) angeordnet sind.

14. Fertigungsanlage nach Anspruch 13, **dadurch gekennzeichnet, dass** die Schaltische (5, 6, 7), zur Ausbildung einer gemeinsamen Schalfläche, unmittelbar benachbart sind.

15. Verfahren zur Herstellung von Fertigbauteilen aus mineralisch gebundenen Baustoffen mittels einer Fertigungsanlage (1), wobei die Fertigungsanlage (1) einen Frachtgutcontainer (2), ein Tragwerk (4) und mindestens einen Schaltisch (5, 6, 7) umfasst,
wobei der Schaltisch (5, 6, 7) zum Gießen der Fertigbauteile aus mineralisch gebundenen Baustoffen vorgesehen ist,
wobei die Fertigungsanlage (1) mobil ist und insgesamt in den Frachtgutcontainer (2) passt, der zur Fertigung der Fertigbauteile mittels eines Lastkraftwagens zum Verwendungsort der Fertigbauteile transportiert wird,
wobei der Schaltisch (5, 6, 7) auf dem Tragwerk (4) gelagert ist, das zusammen mit dem Schaltisch (5, 6, 7) auf Schienen (3) bei Gebrauch aus dem Frachtgutcontainer (2) heraus und bei Nichtgebrauch in diesen hinein verlagert wird,
**dadurch gekennzeichnet daß** das Tragwerk (4) Längsträger (9a) aufweist, welche sowohl zum Verlängern als auch zum Verkürzen des Tragwerks (4) zumindest abschnittsweise translatorisch gegeneinander verlagerbar sind, um das Tragwerk (4) von einer Transportgröße in eine Arbeitsgröße zu überführen.

## Claims

1. Manufacturing system for producing prefabricated parts of mineral-bound building materials, wherein the manufacturing system (1) includes a cargo container (2), a supporting structure (4) and at least one formwork table (5, 6, 7),
wherein the formwork table (5, 6, 7) is provided for casting the prefabricated parts of mineral-bound building materials and is supported on the supporting structure (4),
wherein the supporting structure (4) is transportable to the site of use of the prefabricated parts together with the formwork table (5, 6, 7) in the cargo container (2),
wherein the supporting structure (4) is displaceable out of the cargo container (2) on the site of use together with the formwork table (5, 6, 7),
**characterized in that**
the supporting structure (4) has longitudinal supports (9a) which are translationally mutually displaceable at least in sections both for extending and contracting the supporting structure (4).

2. Manufacturing system according to claim 1, **characterized in that** the supporting structure (4) has rollers (8) and is movable on rails (3) located on the ground on the site of use, and that the rails (3) are carryable along with the cargo container (2).

3. Manufacturing system according to claim 1 or 2, **characterized in that** the supporting structure (4) has a chassis (23) via which the supporting structure (4) is movable together with the at least one formwork table (5, 6, 7) .

4. Manufacturing system according to any one of claims 1 to 3, **characterized in that** the supporting structure (4) includes individual struts (25, 25a) crossing the longitudinal supports (9a) of the supporting structure (4), wherein at least some of the struts (25a) are contractible in themselves and/or extendible.

5. Manufacturing system according to any one of claims 1 to 4, **characterized in that** the formwork table (5, 6, 7) has hinges (14) and is unfoldable to a width which is larger than the width of the cargo container (2).

6. Manufacturing system according to any one of claims 1 to 5, **characterized in that** the formwork table (5, 6, 7) has receptacles for external modules (18) via which the formwork table (5, 6, 7) is enlargeable to a width which is larger than the width of the cargo container (2).

7. Manufacturing system according to any one of claims 1 to 6, **characterized in that** the formwork table (5, 6, 7) is pivoted on the supporting structure (4).

8. Manufacturing system according to any one of claims 1 to 7, **characterized in that** the supporting structure (4) includes swivel bearings (S) via which the formwork table (5, 6, 7) is supported on the supporting structure (4), wherein the swivel bearings (S) are formed and disposed such that the formwork table (5, 6, 7) is inclinable by an inclination angle (W) in mutually different directions around at least two horizontal axes (A) extending parallel to each other.

9. Manufacturing system according to any one of claims 1 to 8, **characterized in that** the formwork table (5, 6, 7) includes a pivot bearing (29) such that the formwork table (5, 6, 7) is rotatable around a rotational axis (z) extending perpendicularly to its formwork area (SF).

10. Manufacturing system according to any one of claims 1 to 9, **characterized in that** the formwork table (5, 6, 7) includes both longitudinal profiles (12) and transverse profiles (13) as well as cross-profiles (19) extending obliquely to them, which are connected to each other in a common junction (20), wherein the cross-profiles (19) preferably each form an angle between themselves and the formwork area (SF) of the formwork table (5, 6, 7), which opens towards the junction (20).

11. Manufacturing system according to claim 10, **characterized in that** a linear drive (21) for pivoting the formwork table (5, 6, 7) is disposed between the supporting structure (4) and the respective junction (20) of the formwork table (5, 6, 7).

12. Manufacturing system according to claim 11, **characterized in that** the linear drive (21) is detachably coupled to the respective junction (20) of the formwork table (5, 6, 7) and the supporting structure (4).

13. Manufacturing system according to any one of claims 1 to 12, **characterized in that** several formwork tables (5, 6, 7) are disposed on a common supporting structure (4).

14. Manufacturing system according claim 13, **characterized in that** the formwork tables (5, 6, 7) are immediately adjacent for forming a common formwork area.

15. Method for producing prefabricated parts of mineral-bound building materials by means of a manufacturing system (1), wherein the manufacturing system (1) includes a cargo container (2), a supporting structure (4) and at least one formwork table (5, 6, 7),
wherein the formwork table (5, 6, 7) is provided for casting the prefabricated parts of mineral-bound building materials,
wherein the manufacturing system (1) is mobile and overall fits into the cargo container (2) transported for producing the prefabricated parts to the site of use of the prefabricated parts by means of a truck,
wherein the formwork table (5, 6, 7) is supported on the supporting structure (4), which is displaced on rails (3) together with the formwork table (5, 6, 7) out of the cargo container (2) upon use and into it upon non-use,
**characterized in that**
the supporting structure (4) has longitudinal supports (9a), which are translationally mutually displaceable at least in sections both for extending and contracting the supporting structure (4) in order to transfer the supporting structure (4) from a transport size into an operating size.

## Revendications

1. Installation de production dévolue à la fabrication d'éléments structurels préfabriqués en des matériaux de construction à liants minéraux, ladite installation de production (1) comprenant un conteneur de fret (2), un châssis de support (4) et au moins un plateau de coffrage (5, 6, 7),
ledit plateau de coffrage (5, 6, 7) étant prévu pour le coulage desdits éléments structurels préfabriqués en des matériaux de construction à liants minéraux, et étant monté sur ledit châssis de support (4),
ledit châssis de support (4) pouvant être transporté dans ledit conteneur de fret (2), conjointement audit plateau de coffrage (5, 6, 7), vers le site d'utilisation desdits éléments structurels préfabriqués,
ledit châssis de support (4) pouvant être extrait dudit conteneur de fret (2) sur ledit site d'utilisation, conjointement audit plateau de coffrage (5, 6, 7),
**caractérisée par le fait que** le châssis de support (4) présente des supports longitudinaux (9a) qui peuvent être mutuellement animés de mouvements translatoires, au moins par tronçons, tant en vue du prolongement que du raccourcissement dudit châssis de support (4).

2. Installation de production selon la revendication 1, **caractérisée par le fait que** le châssis de support (4) est muni de roulettes (8) et est déplaçable, sur le site d'utilisation, sur des rails (3) reposant sur la structure sous-jacente ; et **par le fait que** lesdits rails (3) peuvent être présentés en simultanéité avec le conteneur de fret (2).

3. Installation de production selon la revendication 1 ou 2, **caractérisée par le fait que** le châssis de support (4) présente un train de roulement (23), par l'intermédiaire duquel ledit châssis de support (4) peut être déplacé conjointement au plateau de coffrage (5, 6, 7) à présence minimale.

4. Installation de production selon l'une des revendications 1 à 3, **caractérisée par le fait que** le châssis de support (4) présente des entretoises individuelles (25, 25a) s'entrecroisant avec les supports longitudinaux (9a) dudit châssis de support (4), au moins quelques-unes (25a) desdites entretoises pouvant, par elles-mêmes, être raccourcies et/ou prolongées.

5. Installation de production selon l'une des revendications 1 à 4, **caractérisée par le fait que** le plateau de coffrage (5, 6, 7) est pourvu d'articulations (14) et peut être déployé, par pivotement, jusqu'à une largeur supérieure à la largeur du conteneur de fret (2).

6. Installation de production selon l'une des revendications 1 à 5, **caractérisée par le fait que** le plateau de coffrage (5, 6, 7) comporte des logements dédiés à des modules extérieurs (18) par l'intermédiaire desquels ledit plateau de coffrage (5, 6, 7) peut être agrandi jusqu'à une largeur supérieure à la largeur du conteneur de fret (2).

7. Installation de production selon l'une des revendications 1 à 6, **caractérisée par le fait que** le plateau de coffrage (5, 6, 7) est monté à pivotement sur le châssis de support (4).

8. Installation de production selon l'une des revendications 1 à 7, **caractérisée par le fait que** le châssis de support (4) inclut des paliers de pivotement (S) par l'intermédiaire desquels le plateau de coffrage (5, 6, 7) est monté sur ledit châssis de support (4), lesdits paliers de pivotement (S) étant réalisés et agencés de façon telle que ledit plateau de coffrage (5, 6, 7) puisse être incliné d'un angle d'inclinaison (W), dans des directions mutuellement différentes, autour d'au moins deux axes horizontaux (A) s'étendant parallèlement l'un à l'autre.

9. Installation de production selon l'une des revendications 1 à 8, **caractérisée par le fait que** le plateau de coffrage (5, 6, 7) inclut un système (29) de montage rotatif, de telle sorte que ledit plateau de coffrage (5, 6, 7) puisse tourner autour d'un axe de rotation (z) s'étendant perpendiculairement à sa surface de coffrage (SF).

10. Installation de production selon l'une des revendications 1 à 9, **caractérisée par le fait que** le plateau de coffrage (5, 6, 7) comprend, à la fois, des profilés longitudinaux (12) et des profilés transversaux (13), de même que des profilés d'entretoisement (19) qui s'étendent à l'oblique par rapport à ces derniers et sont reliés mutuellement en un point nodal (20) commun, lesdits profilés d'entretoisement (19) décrivant de préférence, entre eux-mêmes et la surface de coffrage (SF) dudit plateau de coffrage (5, 6, 7), un angle respectif s'ouvrant en direction dudit point nodal (20).

11. Installation de production selon la revendication 10, **caractérisée par le fait qu'**un entraînement linéaire (21), conçu pour faire pivoter le plateau de coffrage (5, 6, 7), est interposé entre le châssis de support (4) et le point nodal considéré (20) dudit plateau de coffrage (5, 6, 7).

12. Installation de production selon la revendication 11, **caractérisée par le fait que** l'entraînement linéaire (21) est couplé amoviblement au châssis de support (4) et au point nodal considéré (20) du plateau de coffrage (5, 6, 7).

13. Installation de production selon l'une des revendications 1 à 12, **caractérisée par le fait que** plusieurs plateaux de coffrage (5, 6, 7) sont disposés sur un châssis de support (4) commun.

14. Installation de production selon la revendication 13, **caractérisée par le fait que** les plateaux de coffrage (5, 6, 7) sont directement voisins, de manière à former une surface commune de coffrage.

15. Procédé conçu pour la fabrication, au moyen d'une installation de production (1), d'éléments structurels préfabriqués en des matériaux de construction à liants minéraux, ladite installation de production (1) comprenant un conteneur de fret (2), un châssis de support (4) et au moins un plateau de coffrage (5, 6, 7),
ledit plateau de coffrage (5, 6, 7) étant prévu pour le coulage desdits éléments structurels préfabriqués en des matériaux de construction à liants minéraux,
ladite installation de production (1) étant mobile et s'ajustant, en totalité, dans ledit conteneur de fret (2) qui est transporté vers le site d'utilisation des éléments structurels préfabriqués, au moyen d'un camion, en vue de la fabrication desdits éléments structurels préfabriqués,
ledit plateau de coffrage (5, 6, 7) étant monté sur ledit châssis de support (4) qui est extrait dudit conteneur de fret (2) en cas d'utilisation et est inséré dans ce dernier en cas de non-utilisation, par déplacement sur des rails (3) conjointement audit plateau de coffrage (5, 6, 7),
**caractérisé par le fait que** le châssis de support (4) présente des supports longitudinaux (9a) qui peuvent être mutuellement animés de mouvements translatoires au moins par tronçons, tant en vue du prolongement que du raccourcissement dudit châssis de support (4), de manière à faire passer ledit châssis de support (4) d'un gabarit de transport à un gabarit de travail.
